**Europäisches Patentamt**

**European Patent Office**

**Office européen des brevets**

(19)

(11) Veröffentlichungsnummer: **0 053 663**

**A1**

(12) ## EUROPÄISCHE PATENTANMELDUNG

(21) Anmeldenummer: **81107896.3**

(22) Anmeldetag: **03.10.81**

(51) Int. Cl.³: **B 60 J 3/00**

(30) Priorität: **05.12.80 DE 3045907**

(43) Veröffentlichungstag der Anmeldung:
**16.06.82 Patentblatt 82/24**

(84) Benannte Vertragsstaaten:
**DE FR IT SE**

(71) Anmelder: **Gebr. Happich GmbH**
**Postfach 10 02 49 Clausenbrücke 1**
**D-5600 Wuppertal 1(DE)**

(72) Erfinder: **Köbel, Michael, Dipl.-Ing.**
**VI. Gartenreihe 30**
**D-6630 Saarlouis(DE)**

(72) Erfinder: **Viertel, Lothar**
**V. Gartenreihe 48**
**D-6630 Saarlouis(DE)**

(74) Vertreter: **Rehders, Jochen**
**c/o Fa. Gebr. Happich GmbH Postfach 10 02 49**
**Clausenbrücke 1**
**D-5600 Wuppertal 1(DE)**

(54) **Sonnenblende, insbesondere für Fahrzeuge.**

(57) Eine Sonnenblende, insbesondere für Fahrzeuge, weist einen Sonnenblendenkörper (1) mit einem Spiegel (4) auf, der in einer Ausnehmung (5) des Sonnenblendenkörpers (1) angeordnet ist.

Die Ausnehmung (5) ist gegenüber dem Spiegel (4) mit Überlänge und bis auf eine an einem Endbereich vorgesehene fensterartige Öffnung (6) mit einer Abdeckung (7) ausgebildet und der Spiegel (4) ist verschiebbar in der Ausnehmung (5) angeordnet.

Fig. 1

EP 0 053 663 A1

- 1 -

H 9oo/9o1                                    31.7.1981 Pom/Sch.


GEBR. HAPPICH GMBH, D 5600 WUPPERTAL
Bundesrepublik Deutschland


Sonnenblende, insbesondere für Fahrzeuge

Die Erfindung bezieht sich auf eine Sonnenblende, insbesondere für Fahrzeuge, mit einem Sonnenblendenkörper und mit einem Spiegel, der in einer Ausnehmung des Sonnenblendenkörpers angeordnet ist.

Eine Sonnenblende der gattungsgemäßen Art ist beispielsweise in der DE-AS 26 19 844 beschrieben. Sonnenblenden dieser Art kommen im allgemeinen an der Beifahrerseite von Fahrzeugen zur Anordnung. Es wird aber nun zunehmend der Wunsch geäußert, auch die dem Fahrer zugeordnete Sonnenblende mit einem Spiegel auszurüsten. Hier besteht jedoch bei heruntergeklappter Lage des Sonnenblendenkörpers, in der der Spiegel eingesehen werden kann, die Gefahr der Blendung für den Fahrer, beispielsweise durch die Scheinwerfer nachfolgender Fahrzeuge.

Die Möglichkeit eines Blendschutzes durch eine dem Spiegel zugeordnete Abdeckklappe ist bekannt, und zwar z. B. durch die Unterlagen des DE-GM 77 o2 394. Diese bekannte Lösung kann aber aus verschiedenen Gründen letztlich nicht befriedigen. Zunächst tritt bei dieser Sonnenblende der Rahmen aus der Blendenebene heraus und bildet harte Kanten, die den Sicherheitsanforderungen entgegenstehen. Die mit dem Rahmen verbundene Abdeckklappe ist an der oberen Rahmenkante angelenkt und nur um 90 Grad verschwenkbar. Die freie vordere Kante der Abdeckklappe ragt daher bei der Offenstellung in den Fahrgastraum hinein und kann bei einer Notbremsung oder bei einem Unfall eine Spießwirkung und damit eine erhöhte Verletzungsgefahr für den jeweiligen Fahrzeugbenutzer erzeugen. Auch wird die Sonnenblende durch die Ausbildung und Anordnung einer Abdeckklappe nicht unwesentlich verteuert.

Es ist nun Aufgabe der Erfindung, bei einer Sonnenblende der eingangs genannten Art Vorsorge dafür zu treffen, daß der Spiegel bei Nichtgebrauch keine Blendung verursachen kann.

Diese Aufgabe wird erfindungsgemäß dadurch gelöst, daß die Ausnehmung gegenüber dem Spiegel mit Überlänge und bis auf eine an einem Endbereich vorgesehene fensterartige Öffnung mit einer Abdeckung ausgebildet ist, und daß der Spiegel verschiebbar in der Ausnehmung angeordnet ist.

Durch diese erfindungsgemäße Maßnahme kann der Spiegel bei Nichtgebrauch schnell und einfach aus dem Blickbereich des Benutzers gebracht werden. Hierfür ist lediglich ein Verschieben des Spiegels erforderlich, so daß zusätzliche Bauteile, wie Abdeckklappen mit Lagerungen und Verschlüssen, entfallen. Die Erfindung läßt sich bei allen gebräuchlichen Sonnenblendenkonstruktionen verwirklichen, also auch bei geschäumten Sonnenblendenkörpern, deren Außenhaut hüllfolienartig verdichtet und/oder mit einer gesonderten Hüllfolie umgeben ist.

Es ist von Vorteil, wenn die Ausnehmung etwa doppelte Spiegellänge aufweist und die fensterartige Öffnung zumindest geringfügig kleiner als der Spiegel ist. Durch die Verdoppelung der Ausnehmungslänge ergibt sich ein relativ großes Spiegelfeld und dadurch, daß die fensterartige Öffnung kleiner als der Spiegel ist, wird dieser wirksam gegen Herausfallen oder gegen ungewollte Herausnahme geschützt.

In bevorzugter Ausgestaltung der Erfindung ist der Spiegel von einem in die Ausnehmung passenden, als Kunststoff-Spritzgußteil ausgebildeten Rahmen verschiebbar aufgenommen, der seinerseits eine fensterartige Öffnung und eine Abdeckung aufweist.

Diese Maßnahme besitzt den Vorteil, daß sich die Schaumpads in gewohnten kurzen Arbeitstakten mit einer Ausnehmung ohne Einlegearbeit schäumen lassen und daß die Befestigung der Spiegel-Rahmen-Einheit durch bloßes Eindrücken bzw., da die umlaufenden Wandungen der Ausnehmung zweckmäßigerweise hinterschnitten ausgebildet werden, Einklipsen erfolgen kann.

Weiterhin ist es von Vorteil, daß der Rahmen aus zwei annähernd rechteckig ausgebildeten und mit ihren Rändern gegeneinandergesetzten Schalenhälften besteht, von denen die vordere die fensterartige Öffnung aufweist.

Die Schalenhälften, die bis auf die fensterartige Öffnung in sich geschlossen sind und den Spiegel kassettenartig zwischen sich aufnehmen, können farblich dem äußeren Erscheinungsbild des Sonnenblendenkörpers angepaßt sein. Das bringt den Vorteil, daß das äußere Erscheinungsbild des Sonnenblendenkörpers auch dann nicht negativ beeinflußt ist, wenn sich der Spiegel bei Nichtgebrauch hinter der Abdeckung befindet.

Von besonderer Wichtigkeit ist es, daß der Rahmen äußere Abrundungsradien von mindestens 3,2 mm aufweist. Durch diese Maßnahme werden die Sicherheitsanforderungen, wie sie im Amtsblatt Nr. L 2o6/26 der Europäischen Gemeinschaften vom 29.7.1978 veröffentlicht worden sind, voll erfüllt.

Das Verschieben des Spiegels von der einen in die andere Endlage wird erleichtert, wenn der Spiegel mit einer angeformten oder angesetzten Griffleiste od. dgl. Handhabe ausgebildet ist. Auch bei der Griffleiste od. dgl. betragen die äußeren Abrundungsradien mindestens 3,2 mm.

Zweckmäßigerweise ist der Spiegel ein Metallspiegel, dessen der Griffleiste abgewandte freie Randkante ebenso wie seine obere und untere Randkante eine nach hinten gerichtete, sich gegen die hintere Schalenhälfte abstützende Verkröpfung aufweist.

Ein Metallspiegel ist bruchsicher und kann durch die eine Stabilisierung bewirkende Verkröpfung relativ dünn und gewichtsarm ausgebildet werden.

Schließlich ist es, insbesondere aus optischen bzw. ästhetischen Gründen von Vorteil, daß der Abstand zwischen der vorderen und hinteren Schalenhälfte im Bereich der fensterartigen Öffnung durch eine Auswölbung der hinteren Schalenhälfte bis auf ein die Verschiebbarkeit des Spiegels nicht behinderndes Maß verringert ist.

Die Erfindung wird nachfolgend anhand eines auf der Zeichnung dargestellten Ausführungsbeispiels näher erläutert. Es zeigen

    Fig. 1 einen Sonnenblendenkörper in Ansicht,

    Fig. 2 eine Einzelheit der Erfindung,

    Fig. 3 einen Schnitt III - III nach Fig. 2,

    Fig. 4 einen Schnitt IV - IV nach Fig. 2,

    Fig. 5 einen Schnitt V - V nach Fig. 2 und

    Fig. 6 eine Einzelheit X nach Fig. 5.

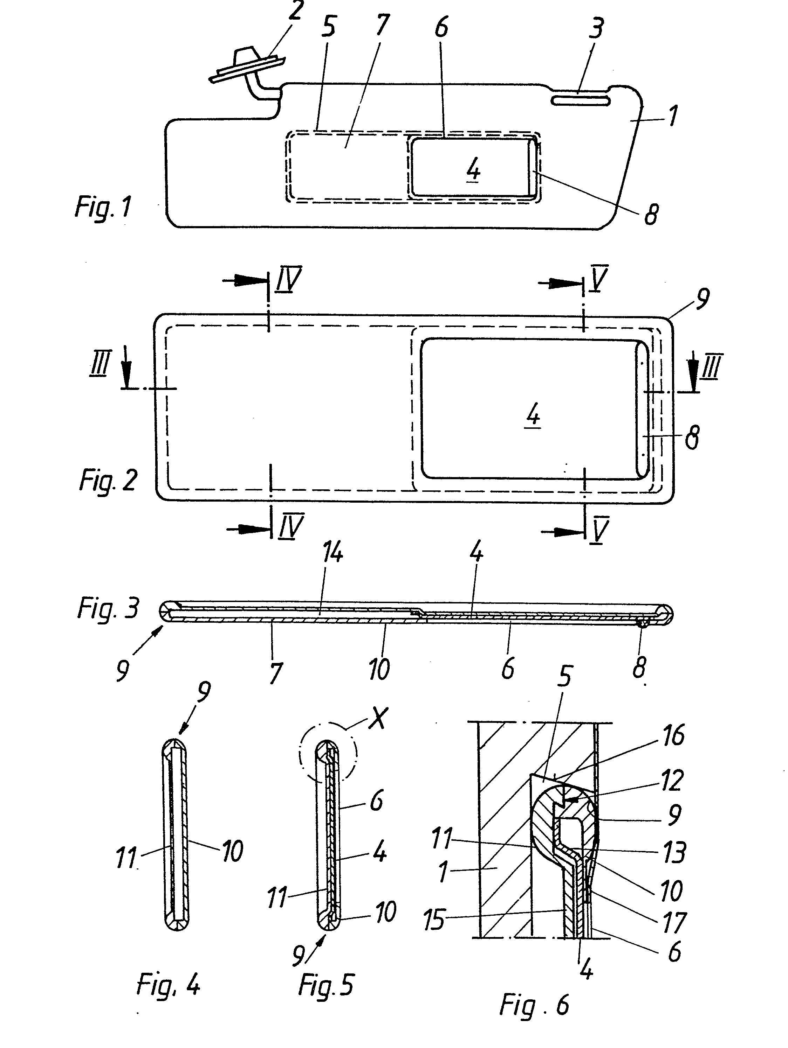

Fig. 1 zeigt einen Sonnenblendenkörper 1, der an der oberen Randkante mit einem Schwenklager 2 und einer Achse 3 für ein Klapp- oder Gegenlager ausgerüstet ist.

In dem Sonnenblendenkörper 1 ist ein Spiegel 4 angeordnet, und zwar hin- und herverschiebbar in einer Ausnehmung 5, die bis auf eine fensterartige Öffnung 6 mit einer Abdeckung 7 versehen ist. Wenn der Spiegel 4 nicht eingesehen werden soll, kann er mittels der daran angeordneten Griffleiste 8 unter die Abdeckung 7 und damit aus dem Blickfeld des Benutzers geschoben werden. Die fensterartige Öffnung 6 ist kleiner als die Spiegelabmessungen, so daß der Spiegel 4 in der Ausnehmung 5 verliersicher geführt ist.

Fig. 2 bis 6 zeigen die Anordnung des Spiegels 4 in einem als Kunststoff-Spritzgußteil ausgebildeten, etwa rechteckigen Rahmen 9, der seinerseits, vgl. Fig. 6, in die Aus- nehmung 5 des Sonnenblendenkörpers 1 paßt. Der Rahmen 9 besteht aus einer vorderen Schalenhälfte 10 und einer hinteren Schalenhälfte 11, die unter Einschluß des Spiegels 4, im dargestellten Ausführungsbeispiel nach Art einer Schwalbenschwanzverbindung 12, ineinandergeschoben sind und eine kassettenartige Aufnahme für den Spiegel bilden.

Die vordere Schalenhälfte 10 weist die fensterartige Öffnung 6 auf, die den Einblick in den Spiegel 4 ermöglicht, wenn er in die auf der Zeichnung rechte Endstellung geschoben ist. Gleichzeitig bildet die Schalenhälfte 10 die Abdeckung 7 für den Spiegel 4, wenn dieser dem Blickfeld entzogen sein soll.

Bei dem Spiegel 4 handelt es sich vornehmlich um einen Metallspiegel aus dünnem Material, der zwecks Stabilisierung an seiner oberen und unteren Randkante sowie an seiner Randkante, die der Griffleiste 8 abgewandt ist, jeweils eine Verkröpfung 13 aufweist, die sich gegen die hintere Schalenhälfte 11 abstützt.

Die Verkröpfungen 13 verlangen einen größeren Zwischenraum 14 zwischen den Schalenhälften 10 und 11. Dieser Zwischenraum 14 ist im Bereich der fensterartigen Öffnung 6 durch eine Auswölbung 15 der hinteren Schalenhälfte 11 bis auf ein Maß verringert, welches erforderlich ist, um die Verschiebbarkeit des Spiegels 4 nicht zu behindern.

Fig. 6 zeigt einen Querschnittsbereich durch einen Sonnenblendenkörper 1. Es ist erkennbar, daß die umlaufenden Wandungen 16 der Ausnehmung 6 hinterschnitten ausgebildet sind, so daß für die Montage des mit Spiegel 4 bestückten Rahmens 9 nur ein Einklipsen erforderlich ist. Weiterhin läßt insbesondere Fig. 6 erkennen, daß die äußeren Abrundungsradien des Rahmens 9 nicht kleiner als 3,2 mm sind. Schließlich zeigt Fig. 6 eine den Sonnenblendenkörper 1 umgebende Hüllfolie 17, die mit dem Rahmen 9 verschweißt ist und die selbstverständlich eine mit der fensterartigen Öffnung 6 zusammenfallende Öffnung aufweist.

H 9oo/9o1                                    31.7.1981 Pom/Sch.

Patentansprüche

1. Sonnenblende, insbesondere für Fahrzeuge, mit einem Sonnenblendenkörper (1) und mit einem Spiegel (4), der in einer Ausnehmung (5) des Sonnenblendenkörpers (1) angeordnet ist, dadurch gekennzeichnet, daß die Ausnehmung (5) gegenüber dem Spiegel (4) mit Überlänge und bis auf eine an einem Endbereich vorgesehene fensterartige Öffnung (6) mit einer Abdeckung (7) ausgebildet ist, und daß der Spiegel (4) verschiebbar in der Ausnehmung (5) angeordnet ist.

2. Sonnenblende nach Patentanspruch 1, dadurch gekennzeichnet, daß die Ausnehmung (5) etwa doppelte Spiegellänge aufweist und daß die fensterartige Öffnung (6) zumindest geringfügig kleiner als der Spiegel (4) ist.

3. Sonnenblende nach Patentanspruch 1 oder 2, dadurch gekennzeichnet, daß der Spiegel (4) von einem in die Ausnehmung (5) passenden, als Kunststoff-Spritzgußteil ausgebildeten Rahmen (9) verschiebbar aufgenommen ist, der seinerseits eine fensterartige Öffnung (6) und eine Abdeckung (7) aufweist.

4. Sonnenblende nach Patentanspruch 3, dadurch gekennzeichnet, daß der Rahmen (9) aus zwei annähernd rechteckig ausgebildeten, mit ihren Rändern gegeneinandergesetzten Schalenhälften (10 und 11) besteht, von denen die vordere Schalenhälfte (10) die fensterartige Öffnung (6) aufweist.

5. Sonnenblende nach Patentanspruch 3 oder 4, dadurch gekennzeichnet, daß der Rahmen (9) äußere Abrundungsradien von mindestens 3,2 mm aufweist.

6. Sonnenblende nach einem oder mehreren der Patentansprüche 1 bis 5, dadurch gekennzeichnet, daß der Spiegel (4) mit einer angeformten oder angesetzten Griffleiste (8) ausgebildet ist.

7. Sonnenblende nach einem oder mehreren der Patentansprüche 1 bis 6, dadurch gekennzeichnet, daß der Spiegel (4) ein Metallspiegel ist, dessen der Griffleiste (8) abgewandte freie Randkante eine nach hinten gerichtete, sich gegen die hintere Schalenhälfte (11) abstützende Verkröpfung (13) aufweist.

8. Sonnenblende nach einem oder mehreren der Patentansprüche 3 bis 7, dadurch gekennzeichnet, daß der Abstand zwischen der vorderen und hinteren Schalenhälfte (10 und 11) im Bereich der fensterartigen Öffnung (6) durch eine Auswölbung der hinteren Schalenhälfte (11) bis auf ein die Verschiebbarkeit des Spiegels (4) nicht behinderndes Maß verringert ist.

1/1

0053663

Fig. 1

Fig. 2

Fig. 3

Fig. 4

Fig. 5

Fig. 6

# EUROPÄISCHER RECHERCHENBERICHT

**0053663**

Nummer der Anmeldung

EP 81 10 7896.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A1 - 2 429 685 (MAGLUM) <br> * Anspruch 1; Fig. 2a,2b * | 1 |
| | FR - A1 - 2 453 042 (CIM) <br> * Anspruch 1 * | 1 |
| | DE - A1 - 2 901 605 (GEBR. HAPPICH) <br> * Anspruch 1 * | 3 |
| A | US - A - 3 375 364 (K.H. MARCUS) <br> * Fig. 2 * | |
| P,X | DE - U1 - 8 032 430 (GEBR. HAPPICH) <br> * ganzes Dokument * | 1-8 |
| D,A | DE - B2 - 2 619 844 (GEBR. HAPPICH) | |
| D,A | DE - U - 7 702 394 (GEBR. HAPPICH) | |

**KLASSIFIKATION DER ANMELDUNG (Int. Cl.³)**

B 60 J 3/00

**RECHERCHIERTE SACHGEBIETE (Int. Cl.³)**

B 60 J 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-01-1982 | BECKER |

EPA form 1503.1  06.78